(19) Europäisches Patentamt
European Patent Office
Office européen des brevets

(11) Veröffentlichungsnummer: **0 267 565**
**B1**

(12) # EUROPÄISCHE PATENTSCHRIFT

(45) Veröffentlichungstag der Patentschrift: **16.01.91**

(51) Int. Cl.$^5$: **C 07 F 9/10**

(21) Anmeldenummer: **87116516.3**

(22) Anmeldetag: **09.11.87**

(54) **Einstufiges Verfahren zur Herstellung von gemischt substituierten 1,2-Di-acyl-sn-glycero-3-phosphocholinen.**

(30) Priorität: **13.11.86 DE 3638687**

(43) Veröffentlichungstag der Anmeldung:
**18.05.88 Patentblatt 88/20**

(45) Bekanntmachung des Hinweises auf die Patenterteilung:
**16.01.91 Patentblatt 91/03**

(84) Benannte Vertragsstaaten:
**AT BE CH DE ES FR GB GR IT LI LU NL SE**

(56) Entgegenhaltungen:
**EP-A-0 161 519**

**HELVETICA CHIMICA ACTA, Band 66, Nr. 120, Teil 4, 1983, Seiten 1210-1240; G. HIRTH et al.: "120. Synthese von Glycerylätherphosphatiden, 2. Mitteilung, Herstellung von 2-O-Acetyl-1-O-(Z)-9-octadecenylr-sn-glyceryl-3-phosphorylcholin ("Oleyl-PAF"), des Enantiomeren sowie einiger analoger, ungesättigter Verbindungen"**

(73) Patentinhaber: **Hafslund Nycomed Pharma Aktiengesellschaft**
**St. Peter-Strasse 25**
**A-4021 Linz (AT)**
(84) **BE CH DE ES FR GB GR IT LI LU NL SE AT**

(72) Erfinder: **Paltauf, Friedrich, Dr.**
**St. Peter Hauptstrasse 29b**
**A-8042 Graz (AT)**
Erfinder: **Hermetter, Albin, Dr.**
**Sandgasse 25**
**A-8010 Graz (AT)**
Erfinder: **Franzmair, Rudolf, Dr.**
**Franz-Xaver-Müllerweg 9**
**A-4033 Linz (AT)**

(74) Vertreter: **Kunz, Ekkehard, Dr.**
**Chemie Holding AG Patentwesen St. Peter-Strasse 25**
**A-4021 Linz (AT)**

(56) Entgegenhaltungen:
**H.A. Staab, W. Rohr:"Synthesen mit heterocyclischen Amiden" in "Neuere Methoden in der präperativen organischen Chemie V", G. Thieme Verlag, Seiten 33, 53-55**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 267 565 B1

Courier Press, Leamington Spa, England.

**Beschreibung**

Die vorliegende Erfindung betrifft ein neues, einstufiges Verfahren zur Herstellung von chemisch definierten, enantiomerenreinen 1,2-Di-acyl-*sn*-glycero-3-phosphocholinen, die in den Positionen 1 und 2 des Glycerins unabhängig voneinander mit verschiedenen Acylresten substituiert sind, aus bekannten Zwischenprodukten.

In der EP—A—0161519 sind unsubstituiert und substituierte 1-O-Triphenylmethyl-*sn*-glycero-3-phosphocholine als neue Zwischenprodukte für die Synthese von Phosphatidylcholinen beschrieben. Insbesondere können aus diesen Zwischenprodukten auf einfache Weise gemischt substituierte, enantiomerenreine 1,2-Diacyl-*sn*-glycero-3-phosphocholine hergestellt werden, indem zunächst in der freien Position 2 des Glycerins der gwünschte Acylrest unter Bildung eines 1-O-Triphenylmethyl-2-acyl-*sn*-glycero-3-phosphocholins eingeführt, unter Abspaltung der 1-O-Triphenylmethylschutzgruppe ein 2-Acyl-*sn*-glycero-3-phosphocholin als weiteres Zwischenprodukt isoliert und dieses schließlich im letzten, getrennten Verfahrensschritt durch Acylierung in Position 1 des Glycerins in das gesuchte Endprodukt übergeführt wird.

Obwohl das in der EP—A—0161519 geoffenbarte Verfahren einen ganz wesentlichen Fortschritt bei der Synthese von gemischt substituierten 1,2-Diacyl-*sn*-glycero-3-phosphocholinen darstellt und die Herstellung dieser wichtigen Verbindungsklasse in wirtschaftlicher und zeitsparender Weise auch im technischen Maßstab zum erstenmal ermöglicht, lag der vorliegenden Erfindung die Aufgabe zugrunde, das Verfahren noch weiter zu vereinfachen, wobei gerade in Hinblick auf dessen großtechnische Anwendung die Zusammenfassung von mehreren Verfahrensschritten unter Umgehung der Isolierung und Abtrennung einzelner Zwischenprodukte oberstes Ziel war.

Diese Aufgabe konnte durch die vorliegende Erfindung auf unerwartet einfache und wirkungsvolle Art und Weise gelöst werden, indem ein einstufiges Verfahren gefunden wurde, mit dem 1-O-Triphenylmethyl-2-acyl-*sn*-glycero-3-phosphocholine in einer sogenannten "Eintopfreaktion" direkt in die gemischt substituierten 1,2-Diacyl-*sn*-glycero-3-phosphocholine umgewandelt werden können.

Gegenstand der Erfindung ist demnach ein einstufiges Verfahren zur Herstellung von gemischt substituierten, enantiomerenreinen 1,2-Diacyl-*sn*-glycero-3-phosphocholinen der allgemeinen Formel

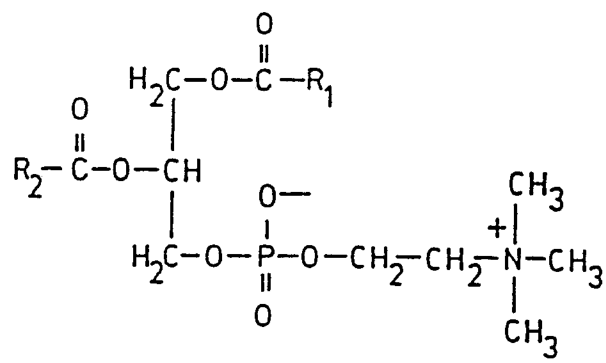

I

in der

$R_1$ und $R_2$ verschieden sind und unabhängig voneinander einen unsubstituierten oder ein- oder mehrfach durch Halogenatome oder Alkoxyreste substituierten $C_1$ bis $C_{24}$-Alkyl- oder $C_3$ bis $C_{24}$-Alkenylrest bedeuten; das erfindungsgemäße Verfahren besteht darin, daß man ein 1-O-Triphenylmethyl-2-acyl-*sn*-glycero-3- phosphocholin der allgemeinen Formel

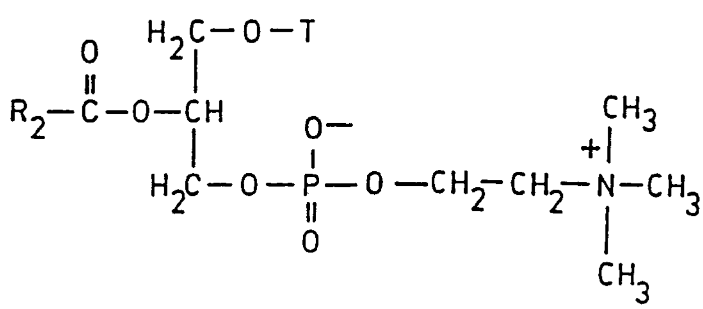

II

in der

$R_2$ wie in Formel I definiert ist und

T eine unsubstituierte oder ein- oder mehrfach durch $C_1$ bis $C_6$-Alkyl-, $C_1$ bis $C_6$-Alkoxyrest oder Halogenatome substituierte Triphenylmethylgruppe bedeutet, mit einem reaktiven Carbonsäurederivat der allgemeinen Formel

$$R_1—CO—X \qquad III$$

in der

$R_1$ wie in Formel I definiert ist und

X a) einen Carbonsäurerest der Formel $R_1$—CO—O— (IV) oder $CF_3$—CO—O— (V), wobei $R_1$ in Formel (IV) die gleiche Bedeutung wie in Formel (I) hat,

b) einen Kohlensäurerest der Formel $R_3$—O—CO—O— (VI), wobei $R_3$ für niederes Alkyl, Aralkyl oder einen unsubstituierten oder ein- oder mehrfach durch niederes Alkyl, niederes Alkoxy, Trifluormethyl oder Halogen substituierten Phenyl-, 1- oder 2-Naphthylrest steht,

c) einen Sulfonsäurerest der Formel $R_4$—$SO_2$—O— (VI), wobei $R_4$ für niederes Alkyl, perfluoriertes niederes Alkyl oder einen unsubstituierten oder ein- oder mehrfach durch niederes Alkyl, niederes Alkoxy, Trifluormethyl oder Halogen substituierten Phenyl, 1- oder 2-Naphthylrest steht, oder

d) einen Imidazolyl-, Triazolyl-, Tetrazolyl-, Benzimidazolyl- oder Benztriazolylrest bedeutet,

in Gegenwart einer anorganischen oder organischen Protonensäure, einer Lewis-Säure oder deren Addukte mit Elektronendonatoren in einem gegenüber den Reaktionspartnern inerten Lösungsmittel oder Lösungsmittelgemisch bei Temperaturen von −10°C bis zum Siedepunkt des Lösungsmittels oder der niedrigst siedenden Lösungsmittelkomponente umsetzt und die dabei enthaltenen Verbindungen der allgemeinen Formel I aus dem Reaktionsgemisch isoliert.

Die in der vorliegenden Beschreibung verwendete Nomenklatur und Stellungsbezeichnung für das Glycerophosphocholin und dessen Derivate folgt den im Biochem. J. 171,29—35 (1978) angegebenen Regeln. Die Abkürzung *"sn"* in den systematischen chemischen Bezeichnungen der angeführten Verbindungen bedeutet "stereospezifisch numeriert". Sämtliche Stellungsbezeichnungen in der vorliegenden beschreibung, die sich auf die Stellung der Substituenten am Glycerinrest beziehen, basieren auf dieser stereospezifischen Numerierung.

$R_1$ und $R_2$ in der Bedeutung als "$C_1$ bis $C_{24}$ Alkyl" stehen in der vorliegenden Beschreibung für einen geradkettigen oder ein- oder mehrfach verzweigten, gesättigten Kohlenwasserstoff rest und in der Bedeutung "$C_3$ bis $C_{24}$ Alkenyl" für einen geradkettigen oder ein- oder mehrfach verzweigten, ein- oder mehrfach ungesättigten Kohlenwasserstoffrest. Sowohl in der Bedeutung "Alkyl" als auch "Alkenyl" können die Reste $R_1$ und $R_2$ ein- oder mehrfach substituiert sein, wobei als solche Substituenten bevorzugt Halogenatome, wie Chlor, Brom, Jod oder Fluor, oder Alkoxyreste, wie Methoxy, Ethoxy, Propyloxy, Butyloxy und dergleichen, in Frage kommen.

Die mit "T" bezeichnete Triphenylmethylschutzgruppe in Formel II ist bevorzugt unsubstituiert, es kann jedoch in manchen Fällen zur Verbesserung der Löslichkeit vorteilhaft sein, Triphenylmethylgruppen, die an einem, zwei oder allen drei Phenylresten ein- oder mehrfach substituiert sind, einzuführen, wobei diesfalls als Substituenten insbesondere geradkettige oder verzweigte $C_1$ bis $C_6$-Alkyl- oder $C_1$ bis $C_6$-Alkoxyreste oder die oben angeführten Halogenatome in Frage kommen.

Wenn X in Formel III einen Kohlensäurerest der Formel VI oder einen Sulfonsäurerest der Formel VII bedeutet, ist $R_3$ und $R_4$ in diesen Resten in der Bedeutung "niederes Alkyl" bevorzugt ein gesättigter $C_1$ bis $C_4$-Kohlenwasserstoffrest, wie Methyl, Ethyl, Propyl, Isopropyl, Butyl, sek. oder tert. Butyl, und in der Bedeutung "perfluoriertes niederes Alkyl" einer der oben genannten Kohlenwasserstoffreste, in dem die Wasserstoffatome drch Fluor ersetzt sind, bevorzugt Trifluormethyl oder Perfluorethyl. Falls $R_3$ und/oder $R_4$ einen aromatischen Rest bedeuten, stehen $R_3$ und $R_4$ bevorzugt für einen unsubstituierten oder durch niederes Alkyl, niederes Alkoxy, Trifluormethyl oder Halogen ein- oder mehrfach substituierten Phenyl-, 1- oder 2-Naphtylrest. In der Bedeutung "Aralkyl" stehen diese Reste bevorzugt für einen durch Phenyl substituierten niederen Alkylrest, wie Benzyl oder Phenylethyl.

Verbindungen der allgemeinen Formel III, worin X einen Imidazolyl-, Triazolyl-, Tetrazolyl-, Benzimidazolyl- oder Benztriazolylrest bedeutet, sind aktive Amide, die auch als Carbonsäureazolide bezeichnet werden. Carbonsäureazolide und ihre Herstellung sind in der Arbeit von H. A. Staab und W. Rohr "Synthesen mit heterocyclischen Amiden" (erschienen in W. Foerst, Neuere Methoden in der präparativen organischen Chemie, V, Seite 33 ff, Georg Thieme Verlag, Stuttgart)beschrieben.

Die Umsetzung von Verbindungen der Formel II mit jenen der Formel III wird erfindungsgemäß in einem polaren aprotischen Lösungsmittel oder Lösungsmittelgemisch, welches gegenüber den jeweiligen Reaktionspartnern inert ist und in dem diese gut löslich sind, durchgeführt. Hiezu gehören vorzugsweise Ether, wie Diethylether, Diisopropylether, Tetrahydrofuran, Dioxan, Ethylenglykoldimethylether und dergleichen; halogenierte aliphatische und aromatische Kohlenwasserstoffe, wie Methylenchlorid, Chloroform, 1,2-Dichlorethan, Tetrachlorkohlenstoff, Chlorbenzol, p-Chlortoluol und dergleichen; Ester, Amide und Nitrile von Carbonsäuren, wie Methyl-, Ethyl-, Butylacetat, Dimethylformamid, Dimethylacetamid, Acetonitril und dergleichen; weiters Hexamethylphosphorsäuretriamid, N-Methylpyrrolidon, Dimethylsulfoxid oder Gemische der genannten Lösungsmittel in beliebiger Zusammensetzung.

Als besonders geeignete Lösungsmittel für die erfindungsgemäße Umsetzung sind Methylenchlorid, Chloroform, diethylether, Acetonitril oder Ethylacetat zu nennen.

Als Acylierungsmittel der allgemeinen Formel III sind die oben angeführten reaktiven Carbonsäurederivative an sich in gleich Weise für das erfindungsgemäße Verfahren geeignet. Die Auswahl richtet sich in der Regel nach den Vorteilen bei der Herstellung und Zugänglichkeit dieser Carbonsäurederivate in Abhängigkeit von der jeweiligen Bedeutung des Restes $R_1$ in den Verbindungen der Formel III. In dieser Hinsicht sind als besonders bevorzugte Carbonsäurederivate Anhydride der Formel III, worin X einen

Carbonsäurerest der Formel IV, oder gemischte Anhydride der Formel III, worin X den Trifluoracetatrest der Formel V bedeutet, zu nennen. Besonders bevorzugte Acylierungsmittel sind weiters die "Carbonsäure-azolide" der allgemeinen Formel III, worin X den Rest eines gegebenenfalls kondensierten fünfgliederigen Heterocyclus mit mindestens 2-N-Atomen im Ring bedeutet. Beispiele hierfür sind der Imidazolyl-, 1,2,3-Triazolyl-, 1,2,4-Triazolyl-, Tetrazolyl- Benzimidazolyl- oder Benztriazolylrest. Ganz besonders bevorzugt sind hier wiederum 1-Acyl-1,2,4-triazole und N-Acyltetrazole, die mit dem jeweils gewünschten Acylrest $R_1$—CO—, der bei der erfindungsgemäßen Umsetzung in die Position 1 des Glycerins eingeführt werden soll, substituiert sind.

Unter den als Acylierungsmitteln genannten "aktiven Estern" der allgemeinen Formel III, bei denen X einen Kohlensäurerest der Formel VI oder Sulfonsäurerest der Formel VII bedeutet, sind wiederum solche Verbindungen ganz besonders bevorzugt, bei denen in den genannten Resten $R_3$ die Bedeutung von Methyl, Ethyl, Benzyl oder Phenyl und $R_4$ jene von Methyl, Ethyl oder Trifluormethyl hat.

Bei der erfindungsgemäßen Umsetzung gelingt es überaschenderweise durch eine völlig neue Verfahrenstechnik in einer einzigen Reaktionsstufe, ohne jede Isolierung von Zwischenprodukten, in den Ausgangsverbindungen der allgemeinen Formel II die 1-O-Triphenylmethylschutzgruppe abzuspalten und in die freigesetzte Position 1 des Glycerins den gewünschten Acylrest einzuführen. Einstufige Umsetzungen, dem Verfahrenstechniker auch unter der Bezeichnung "Eintopfreaktionen" bekannt, welche zwei an sich grundsätzlich verschiedene Reaktionstypen, wie die Entfernung einer OH-Schutzgruppe unter Freisetzung der Hydroxylfunktion und deren Acylierung, in einem einzigen Reaktionsschritt umfassen, sind bisher weder bei der Herstellung von Phosphatidylcholinen noch sonst in der chemischen Verfahrenstechnik bekannt.

Diese neue Verfahrenstechnik bedingt den Einsatz eines sog. "3-Komponenten Reaktionsystems", welches neben den geschützten Ausgangsverbindungen der Formel II und einem Acylierungsmittel der Formel III die gleichzeitige Anwesenheit eines geeigneten Sauren Agens zur Entfernung der Triphenylmethylschutzgruppe beinhaltet. Als saures Agens kommen einerseits sowohl anorganische als auch organische Protonensäuren und andererseits Lewis-Säuren in Betracht. Geeignete anorganische Protonensäuren sind vorzugsweise flüssige oder gasförmige Mineralsäuren, wobei sich in dieser Gruppe von Säuren das Einleiten von trockenem Chlorwasserstoff in das Reaktionsgemisch ganz besonders bewährt hat. Unter den organischen Protonensäuren sind bevorzugt Carbonsäuren und perfluorierte Carbonsäuren, ganz bevorzugt Trifluoressigsäure, oder aliphatische und aromatische, gegebenenfalls perfluorierte Sulfonsäuren, wie Methansulfonsäure, Ethansulfonsäure, Perfluormethansulfonsäure, Benzolsulfonsäure, p-Toluolsulfonsäure und dergleichen zu nennen, wobei hier wiederum Methansulfonsäure eine bevorzugte Stellung einnimmt.

Unter den Lewis-Säuren sind in erster Linie Bortrifluorid, Bortrichlorid, Aluminiumtrichlorid, Zinkchlorid und deren üblicherweise verwendeten Addukte mit Elektronendonatoren, wie Ethern, Mercaptanen, Thioethern, Aminen und dergleichen, zu nennen. Als ganz besonders vorteilhaft hat sich in der Gruppe der Lewis-Säuren die Verwendung von Botrifluorid-etherat herausgestellt.

Zur praktischen Durchführung der erfindungsgemäßen "Eintopfreaktion" geht man zweckmäßigerweise so vor, daß man ein "3-Komponenten-Raktionsgemisch" aus Ausgangsverbindung der Formel II, Acylierungsmittel der Formel III und saurem Agens in einem der genannten Lösungsmittel oder Lösungsmittelgemische bildet und bis zur vollständigen Umsetzung reagieren läßt.

An sich werden die Reaktionsteilnehmer in zueinander äquimolaren Mengen verbraucht. Zur Erhöhung der Reaktionsgeschwindigkeit und Verbesserung der Ausbeuten hat es sich jedoch als vorteilhaft erwiesen, sowohl das Acylierungsmittel als auch des sauer Agens im Verhältnis zur Ausgangsverbindung der Formel II im Überschuß einzusetzen. In einer besonders bevorzugten Ausführungsform des Verfahrens wird das Acylierungsmittel in einem 1,2- bis 2-fachen molaren Überschuß und das saure Agens in einem 2- bis 8-fachen molaren Überschuß, jeweils bezogen auf das Ausgangsmaterial der Formel II, eingesetzt.

Die Reaktionstemperatur kann in einem weiten Bereich von −10°C bis zum Siedepunkt des Lösungsmittels oder der niedrigst siedenen Lösungsmittelkomponente an sich beliebig gewählt werden. Bevorzugt wird die Umsetzung jedoch im Temperaturbereich von 0°C bis 25°C durchgeführt.

Die Reaktionsdauer hängt von den üblichen Parametern, wie Reaktionstemperatur, Reaktivität der Reaktionspartner, Ansatzgröße und ähnlichen Faktoren, ab und beträgt in der Regel von wenigen Minuten bis zu mehreren Stunden.

Die Aufarbeitung des Reaktionsgemisches und Isolierung der Endprodukte der allgemeinen Formel I kann mit üblichen, jedem Fachmanne geläufigen, chemischen Arbeitsmethoden durchgeführt werden. Man kann beispielsweise den Reaktionsansatz neutralisieren und die gebildeten 1,2-Diacyl-*sn*-glycero-3-phosphocholine durch Verteilung zwischen zwei Phasen und mehrmaliges Auswaschen der produkthältigen Phase in bereits sehr reiner Form gewinnen. Die Reindarstellung der Verbindungen der Formel I erfolgt vorteilhafterweise durch Anwendung chromatographischer Methoden, beispielsweise durch Dünnschicht-, Säulen-Hochdruckflüssigkeitschromatographie und dergleichen.

Das erfindungsgemäße Verfahren ermöglicht nicht nur eine wesentlich einfachere, zeitsparendere und effektivere Herstellung von gemischt substituierten 1,2-Diacyl-*sn*-glycero-3-phosphocholinen sondern ergibt unerwarteterweise auch einheitlichere und reinere Produkte als es mit den bisher bekannten Verfahren der Fall war.

Insbesondere tritt die Isomerenbildung durch Acylwanderung von der Position 2 in die Position 1 des

Glycerins, die sonst als unerwünschte Nebenreaktion in den meisten Fällen zu beobachten ist, beim erfindungsgemäßen Verfahren praktisch nicht auf, sodaß zu mehr als 98% einheitliche Produkte erhalten werden.

Die Herstellung der für das erfindungsgemäße Verfahren als Ausgangsmaterial eingesetzten 1-O-Triphenylmethyl-2-acyl-*sn*-glycero-3-phosphocholine ist in der EP—A—0161519 in allen Einzelheiten beschrieben.

Die nachfolgenden Beispiele erläutern die Erfindung näher:

Beispiel 1

1-Palmitoyl-2-oleoyl-*sn*-glycero-3-phosphocholin

7,63 g (10 mMol) 1-O-Trityl-2-oleoyl-*sn*-glycero-3-phosphocholin werden in 100 ml Methylenchlorid gelöst, eine Lösung von 9,90 g (20 mMol) Palmitinsäureanhydrid und eine etherische Lösung von 5,68 g (40 mMol) Bortri-fluorid-etherat zugegeben und eine Stunde bei 0°C gerührt. Unter heftigem Rühren wird dann eine 20%ige Suspension von 25 g Natriumbicarbonat in Wasser zugefügt und 10 Minuten bis zur Beendigung der Gasentwicklung gerührt. Dann werden 50 mol Methanol zugefügt, filtriert, 70 ml Chloroform/Methanol (2/1) zugegeben und die Phasen getrennt. Die Unterphase wird zweimal mit einem schwach ammoniakalischen Gemisch aus Wasser/Methanol (1/1) und einmal mit Wasser Methanol (1/1) gewaschen und dann zur Trockene eingedampft.

Der erhaltene ölige Rohprodukt wird zur Reinigung an Kieselgel chromatographiert. (Eluens: Chloroform-Methanol-Wasser: 10/20/3, v/v/v). Man erhält so 6,98 g (91,9% der Theorie) renes Produkt.

$R_f$ = 0,40 ($CHCl_3/CH_3OH$/konz. $NH_3$ = 65/35/6, v/v/v)

$^1H$-NMR-Spektrum (delta in ppm):

0,9 (6H, $CH_3$), 1,3 ($CH_2$), 1,6—2,3 (alpha- und beta- $CH_2$), 3,16 (9H, s, N-$CH_3$), 3,3 —4,4 (8H, $CH_2$, Glycerol, Cholin), 5,1 (1H, CH-Glycerol), 5,34 (2H, Olefin)

Elementaranalyse: $C_{42}H_{82}NO_8P$ (MG = 760,09)

| | | | | |
|---|---|---|---|---|
| ber.: | C 66,37 | H 10,87 | N 1,84 | P 4,08 |
| gef.: | C 66,2 | H 10,9 | N 1,7 | P 3,9 |

Analog zu der in Beispiel 1 angegebenen Arbeitsmethode wurden erhalten:

Beispiel 2

1-Palmitoyl-2-oleoyl-*sn*-glycero-3-phosphocholin

durch Umsetzung von 7,63 g (10 mMol) 1-O-Trityl-2-Oleoyl-*sn*-glycero-3-phosphocholin mit 5.86 g (20 mMol) 1-Palmitoyl-1,2,4-triazol in Gegenwart von 11,36 g (80 mMol) Bortrifluorid-etherat.

Ausbeute: 6,84 g (90% der Theorie) reines Produkt, welches mit dem in Beispiel 1 enthaltenen Produkt identisch ist.

Herstellung von 1-Palmitoyl-1,2,4-triazol:

Palmitinsäurechlorid wird in Methylenchlorid gelöst und zu einer Lösung von 2 Äquivalenten 1,2,4-Triazol in Methylenchlorid getropft, einige Stunden bei Raumtemperatur gerührt, filtriert und das Filtrat direkt in der Reaktion eingesetzt.

Beispiel 3

1-Palmitoyl-2-oleoyl-*sn*-glycero-3-phosphocholin

durch Umsetzung von 763 mg (1 mMol) 1-O-Trityl-2-Oleoyl-*sn*-glycero-3-phosphocholin mit 628 mg (2 mMol) Palmitoylethylcarbonat in Gegenwart von 568 mg (4 mMol) Bortrifluorid-etherat bei 20°C.

Ausbeute: 614 mg (80,8% der Theorie) reines Produkt, welches mit dem in Beispiel 1 erhaltenen Produkt identisch ist.

Herstellung von Palmitoylethylcarbonat:

Palmitinsäure und Chlorameisensäureethylester werden mit Methylenchlorid im Molverhältnis 1:1 in Gegenwart von trockenem Natriumcarbonat umgesetzt. Es wird vom anorganischen Material abfiltriert und das erhaltene Filtrat direkt in die Reaktion eingesetzt.

Beispiel 4

1-Palmitoyl-2-oleoyl-*sn*-glycero-3-phosphocholin

durch Umsetzung von 7,63 g (10 mMol) 1-O-Trityl-2-oleoyl-*sn*-glycero-3-phosphocholin, gelöst in 100 ml wasserfreiem Diethylether, mit 9,90 g (20 mMol) Palmitinsäureanhydrid und 5,68 g (40 mMol) Bortrifluorid-etherat bei 20°C.

Ausbeute: 4,53 g (59,6% der Theorie) reines Produkt, identisch mit dem Produkt aus Beispiel 1.

Beispiel 5

1-Palmitoyl-2-oleoyl-*sn*-glycero-3-phosphocholin

durch Umsetzung von 3,82 g (5 mMol) 1-O-Trityl-2-oleoyl-*sn*-glycero-3-phoscholin, gelöst in 50 ml wasserfreiem Acetonitril, mit 4,95 g (10 mMol) Palmitinsäureanhydrid und 2,84 g (20 mMol) Bortrifluorid-etherat bei 20°C.

Ausbeute: 2,19 g (57,6% der Theorie) reines Produkt, ident mit dem Produkt aus Beispiel 1.

Beispiel 6

1-Palmitoyl-2-oleoyl-*sn*-glycero-3-phosphocholin

durch Umsetzung von 3,82 g (5 mMol) 1-O-Trityl-2-oleoyl-*sn*-glycero-3-phosphocholin, gelöst in 50 ml wasserfreiem Tetrachlorkohlenstoff, mit 4,95 g (10 mMol) Palmitinsäureanhydrid und 2,84 g (20 mMol) Bortrifluorid-etherat bei 20°C.

Ausbeute: 2,84 g (74,7% der Theorie) reines Produkt, ident mit dem Produkt aus Beispiel 1.

Beispiel 7

1-Stearoyl-2-palmoitoyl-*sn*-glycero-3-phosphocholin

durch Umsetzung von 1,48 g (2 mMol) 1-O-Trityl-2-palmitoyl-*sn*-glycero-3-phosphocholin mit 2,20 g (4 mMol) Stearinsäureanhydrid in Gegenwart von 1,14 g (8 mMol) Bortrifluorid-etherat.

Ausbeute: 1,35 g (88,3% der Theorie) reines Produkt.

$R_f$ = 0,40 (mobile Phase wie Beispiel 1)

NMR: 0,9 (6H, $CH_3$), 1,3 ($CH_2$), 1,6—2,3 (alpha- und beta-$CH_2$), 3,16 (9H, s, N-$CH_3$), 3,3—4,4 (8H, $CH_2$, Glycerol, Cholin), 5,12 (1H, CH-Glycerol)

Elementaranalyse: $C_{42}H_{82}NO_8P$ (MG = 762,11)

| | | | | |
|---|---|---|---|---|
| ber.: | C 66,19 | H 11,11 | N 1,84 | P 4,06 |
| gef.: | C 65,9 | H 11,4 | N 1,7 | P 3,9 |

Beispiel 8

1-Palmitoyl-2-acetyl-*sn*-glycero-3-phosphocholin

durch Umsetzung von 1,08 g (2 mMol) 1-O-Trityl-2-acetyl-*sn*-glycero-3-phosphocholin mit 1,98 g (4 mMol) Palmitinsäureanhydrid und 1,14 g (8 mMol) Bortrifluorid-etherat.

Ausbeute: 0,94 (87,4% der Theorie) reines Produkt

$R_f$ = 0,28 (mobile Phase wie Beispiel 1)

NMR: 0,9 (3H, $CH_3$), 1,3 ($CH_2$), 1,6—2,3 (alpha- und beta-$CH_2$), 2,13 (3H, s, $CH_3CO$), 3,16 (9H, s, N-$CH_3$), 3,3—4,4 (8H, $CH_2$-Glycerol, Cholin), 5,1 (1H, CH-Glycerol)

Elementaranalyse: $C_{26}H_{52}NO_8P$ (MG = 537,67)

| | | | | |
|---|---|---|---|---|
| ber.: | C 58,08 | H 9,75 | N 2,60 | P 5,76 |
| gef.: | C 57,8 | H 10,1 | N 2,4 | P 5,5 |

Beispiel 9

1-Stearoyl-2-methoxyacetyl-*sn*-glycero-3-phosphocholin

durch Umsetzung von 572 mg (1 mMol) 1-O-Trityl-2-methoxyacetyl-*sn*-glycero-3-phosphocholin mit 1,10 g (2 mMol) Stearinsäureanhydrid und 568 mg (4 mMol) Bortrifluorid-etherat.

Ausbeute: 522 mg (87,6% der Theorie) reines Produkt

$R_f$ = 0,27 (mobile Phase wie Beispiel 1)

NMR: 0,9 (3H, $CH_3$), 1,3 ($CH_2$), 1,6—2,3 (alpha- und beta-$CH_2$), 3,16 (9H, s, N-$CH_3$), 3,52 (3H, s, $CH_3O$), 3,3—4,4 (8H, $CH_2$, Glycerol, Cholin), 5,1 (1H, CH-Glycerol), 5,25 (2H, s, O-$CH_2$-O)

Elementaranalyse: $C_{29}H_{58}NO_9P$ (MG = 595,750)

| | | | | |
|---|---|---|---|---|
| ber.: | C 58,47 | H 9,81 | N 2,35 | P 5,20 |
| gef.: | C 58,2 | H 10,0 | N 2,2 | P 5,0 |

Beispiel 10

1-Oleoyl-2-(2-ethyl-hexanoyl)-*sn*-glycero-3-phosphocholin

durch Umsetzung von 1,79 g (3 mMol) 1-O-Trityl-2-(2-ethyl-hexanoyl)-*sn*-glycero-3-phosphocholin und 3,28 g (6 mMol) Ölsäureanhydrid und 1,70 g (12 mMol) Bortrifluorid-etherat.

Ausbeute: 1,72 g (88,5% der Theorie) reines Produkt

$R_f$ = 0,40 (mobile Phase wie Beispiel 1)

NMR: 0,9 (9H, $CH_2$), 1,3 $CH_2$), 1,6—2,5 (alpha- und beta-$CH_2$), 3,16 (9H, s, N-$CH_3$), 3,3—4,4 (9H, $CH_2$, Glycerol, Cholin, CHCO), 5,1 (1H, CH-Glycerol), 5,34 (2H, Olefin).

Elementaranalyse: $C_{34}H_{66}NO_8P$ (MG = 647,874)

| | | | | |
|---|---|---|---|---|
| ber.: | C 63,03 | H 10.27 | N 2,16 | P 4,78 |
| gef.: | C 63,2 | H 10,1 | N 2,2 | P 4,9 |

Beispiel 11

1-Stearoyl-2-(9,10-dibromstearoyl)-*sn*-glycero-3-phosphocholin

durch Umsetzung von 924 mg (1 mMol) 1-O-Trityl-2-(9,10-dibromstearoyl)-*sn*-glycero-3-phosphocholin mit 1,10 g (2 mMol) Stearinsäureanhydrid und 568 mg (4 mMol) Botrtifluorid-etherat.

Ausbeute: 866 mg (91.4% der Theorie) reines Produkt

$R_f$ = 0,40 (mobile Phase wie Beispiel 1)

NMR: 0,9 (6H, $CH_3$), 1,3 ($CH_2$), 1,6—2,5 (alpha- und beta-$CH_2$), 3,16 (9H, s, N-$CH_3$), 3,3—4,4 (8H, $CH_2$, Glycerol, Cholin), 5,1 (3H, n, CH-Glycerol, CH-Br).

Elementaranalyse: $C_{44}H_{86}Br_2NO_8P$ (MG = 947,969)

ber.: C 55,75 H 9,14 N 1.48 P 3,27 Br 16,86

gef.: C 55,5 H 9,4 N 1,3 P 3,0 Br 16,4

Beispiel 12

1-Oleoyl-2-tetracosanoyl-*sn*-glycero-3-phosphocholin

durch Umsetzung von 850 mg (1 mMol) 1-O-Trityl-2-tetracosanoyl-*sn*-glycerophosphocholin mit 833 mg (2 mMol) Oleoylbenzylcarbonat und 568 mg (4 mMol) Bortrifluorid-etherat bei 20°C.

Ausbeute: 472 mg (54,1% der Theorie) reines Produkt

$R_f$ = 0,42 (mobile Phase wie Beispiel 1)

NMR: 0,9 (6H, $CH_3$), 1,3 ($CH_2$), 1,6-2,3 (alpha- und beta-$CH_2$), 3,16 (9H, s, N-$CH_3$), 3,3—4,4 (8H, Glycerol, Cholin), 5,1 (1H, CH-Glycerol), 5,36 (2H, Olefin)

Elementaranalyse: $C_{50}H_{98}NO_8P$ (MG = 872,311)

ber.: C 68,85 H 11,32 N 1,61 P 3,55

gef.: C 68,5 H 11,5 N 1,4 P 3,4

Herstellung von Oleoylbenzylcarbonat:

Wie in Beispiel 3 beschrieben wird Ölsäure mit Chlorameisensäurebenzylester in Gegenwart von trockenem Nariumcarbonat umgesetzt.

Beispiel 13

1-Palmitoyl-2-propionyl-*sn*-glycero-3-phosphocholin

durch Umsetzung von 1,12 g (2 mMol) 1-O-Trityl-2-propionyl-*sn*-glycero-3-phosphocholin mit 1,41 g (4 mMol) Trifluoracetylpalmitat und 1,14 g (8 mMol) Bortrifluorid-etherat be 20°C.

Ausbeute: 786 mg (71,2% der Theorie) reines Produkt

$R_f$ = 0,29 (mobile Phase wie Beispiel 1)

NMR: 0,9 (3H, $CH_3$), 1,3 ($CH_2$), 1,6—2,3 (alpha- und beta-$CH_2$, beta-$CH_3$), 3,16 (9H, s, N-$CH_3$), 3,2—4,4 (8H, m, $CH_2$ Glycerol, Cholin), 5,12 (1H, CH-Glycerol)

Elementaranalyse: $C_{27}H_{54}NO_8P$ (MG = 551,70)

ber.: C 58,78 H 9,87 N 2,54 P 5,61

gef.: C 58,6 H 10,0 N 2,4 P 5,5

Herstellung von Trifluoracetylpalmitat:

Analog wie in Beispiel 2 beschrieben wird Palmitinsäure mit Trifluoressigsäureanhydrid umgesetzt.

Beispiel 14

1-Palmitoyl-2-butyryl-*sn*-glycero-3-phosphocholin

durch Umsetzung von 1,14 g (2 mMol) 1-O-Trityl-2-butyryl-*sn*-glycero-3-phosphocholin mit 3,08 g (4 mMol) N-Palmitoyltetrazol und 5,68 g (8 mMol) Bortrifluorid-etherat.

Ausbeute: 1,09 g (96,3% der Theorie) reines Produkt

$R_f$ = 0,31 (mobile Phase wie Beispiel 1)

NMR: 0,9 (6H, $CH_3$), 1,3 ($CH_2$), 1,6—2,3 (alpha- und beta-$CH_2$), 3,15 (9H, s, N-$CH_3$), 3,1—4,3 (8H, m, $CH_2$ Glycerol, Cholin), 5,13 (1H, CH-Glycerol).

Elementaranalyse: $C_{28}H_{56}NO_8P$ (MG = 565,73)

ber.: C 59,45 H 9,98 N 2,48 P 5,47

gef.: C 59,4 H 10,2 N 2,4 P 5,3

Herstellung von N-Palmitoyl-tetrazol:

Analog wie in Beispiel 2 beschrieben wird Palmitinsäurechlorid mit Tetrazol im Molverhältnis 1:2 umgesetzt.

Beispiel 15

1-Oleoyl-2-isobutyryl-*sn*-glycero-3-phosphocholin

durch Umsetzung von 1,14 g (2 mMol) 1-O-Trityl-2-isobutyryl-*sn*-glycero-3-phosphocholin mit 2,19 g (4 mMol) Ölsäureanhydrid und 5,68 g (8 mMol) Bortrifluorid-etherat.

Ausbeute: 1.09 g (92,1% der Theorie) reines Produkt

$R_f$ = 0,31 (mobile Phase wie Beispiel 1)

NMR: 0,9 (3H, $CH_3$), 1,3 ($CH_2$), 1,6—2,3 (alpha- und beta-$CH_2$, beta-$CH_3$), 3,14 (9H, s, N-$CH_3$), 3,1—4,3 (9H, $CH_2$, Glycerol, Cholin, CH-CO), 5,12 (1H, CH-Glycerol), 5,36 (2H, m, Olefin).

Elementaranalyse: $C_{30}H_{58}NO_8P$ (MG = 591,78)

ber.: C 60,89 H 9,91 N 2,37 P 5,23

gef.: C 60,7 H 10,1 N 2,4 P 5,1

Beispiel 16

1-Stearoyl-2-linoleoyl-*sn*-glycero-3-phosphocholin

durch Umsetzung von 3,81 g (5 mMol) 1-O-Trityl-2-linoleoyl-*sn*-glycero-3-phosphocholin mit 3,36 g (10 mMol) 1-Stearoyl-1,2,4-triazol und 5,68 g (40 mMol) Bortrifluorid-etherat unter Argon.

Ausbeute: 3,32 (84,5% der Theorie) reines Produkt

NMR: 0,9 (6H, $CH_3$), 1,3 ($CH_2$), 1,6—2,3 (alpha- und beta-$CH_2$), 2,75 (2H, =C—$CH_2$—C=), 3,16 (9H, s, N—$CH_3$), 3,3—4,4 (8H, $Ch_2$ Glycerol, Cholin), 5,1 (1H, CH-Glycerol), 5,35 (4H, m, Olefin)

Elementaranalyse: $C_{44}H_{84}NO_8P$ (MG = 786,131)

| | | | | |
|---|---|---|---|---|
| ber.: | C 67,23 | H 10,77 | N 1,78 | P 3,94 |
| gef.: | C 67,0 | H 10,9 | N 1,7 | P 3.7 |

Herstellung von 1-Stearoyl-1,2,4-triazol:

Analog der Herstellung von 1-Palmitoyl-1,2,4-triazol in Beispiel 2.

Beispiel 17

1-($^{14}$)Oleoyl-2-($^{3}$H)oleoyl-*sn*-glycero-3-phosphocholin

durch Umsetzung von 381 mg (0,5 mMol) 1-O-Trityl-2-($^{3}$H)oleoyl-*sn*-glycero-3-phosphocholin (1,2 × $10^8$ cpm/mmol) gelöst in 5 ml Methylenchlorid mit 334 mg (1 mMol) ($^{14}$C)-1-oleoyl-1,2,4-triazol (1,9 × $10^6$ cpm/Mmol) und 568 mg (4 mMol) Bortrifluorid-etherat bei 20°C.

Ausbeute: 354 mg (90% der Theorie) reines Produkt

$R_f$ = 0,42 ($CHCl_3$/$CH_3OH$/konz. $NH_3$ 65/35/5, v/v/v)

NMR: 0,88 (6H, $CH_3$), 1,26 ($CH_2$), 1,6—2,3 (—$CH_2$—$CH_2$—CH=CH, (—$CH_2$—$CH_2$—C=O), 3,16 (9H, s, N—$CH_3$), 3,3—4,4 (8H, $CH_2$, Glycerol, Cholin), 5,1 (1H, Glycerol)

spezifische Aktivitäten:

$^{3}$H: 1,18 × $10^8$ cpm/mmol

$^{14}$C: 0,9 × $10^6$ cpm/mmol

Herstellung von 1-($^{14}$C)-Oleoyl-1,2,4-triazol:

Die Substanz wird analog Beispiel 2 hergestellt.

Beispiel 18

1-($^{14}$C)Oleoyl-2-($^{3}$H)oleoyl-*sn*-glycero-3-phosphocholin

durch Umsetzung von 381 mg (0,5 mMol) 1-O-Trityl-2-($^{3}$H)oleoyl-*sn*-glycero-3-phosphocholin (1,2 × $10^8$ cpm/mMol) gelöst in 5 ml Methylenchlorid mit 547 mg (1 mMol) ($^{14}$C) Ölsäureanhydrid (3,8 × $10^6$ cpm/mMol und 284 mg (2 mMol) Bortrifluorid-etherat bei 0°C.

Ausbeute: 342 mg (86,9% der Theorie) reines Produkt, welches mit dem in Beispiel 17 enthaltenen identisch ist.

Beispiel 19

1-Stearoyl-2-arachidonoyl-*sn*-glycero-3-phosphocholin

durch Umsetzung von 384 mg (0,5 mMol)-1-O-Trityl-2-arachidonoyl-*sn*-glycero-3-phosphocholin mit 336 mg (1 mMol) 1-Stearoyl-1,2,4-triazol und 568 mg (4 mMol) Bortrifluorid-etherat unter Argon.

Ausbeute: 372 mg (91,8% der Theorie) reines Produkt

$R_f$ = 0,38 (mobile Phase wie Beispiel 1)

NMR: 0,9 (6H, $Ch_3$), 1,3 ($CH_2$); 1,6—2,3 (alpha- und beta-$CH_2$), 2,8 (6H, =C—$CH_2$—C=), 3,16 (9H, s, N—$CH_3$), 3,3—4,4 (8H, $CH_2$, Glycerol, Cholin), 5,1 (1H, CH-Glycerol), 5,35 (8H, Olefin).

Elementaranalyse: $C_{46}H_{84}NO_8P$ (MG = 810,151)

| | | | | |
|---|---|---|---|---|
| ber.: | C 68,20 | H 10,45 | N 1,73 | P 3,82 |
| gef.: | C 68,0 | H 10,7 | N 1,6 | P 3.7 |

Beispiel 20

1-Palmitoyl-2-(3-trifluormethylbutyryl)-*sn*-glycero-3-phosphocholin

durch Umsetzung von 638 mg (1 mMol) 1-O-Trityl-2-(3-trifluormethylbutyryl)-*sn*-glycero-3-phosphocholin und 586 mg (2 mMol) 1-Palmitoyl-1,2,4-triazol und 1,14 g (8 mMol) Bortrifluorid-etherat.

Ausbeute: 571 mg (90.4% der Theorie) reines Produkt

$R_f$ = 0,32 (mobile Phase wie Beispiel 1)

NMR: 0,9 (3H, $Ch_3$), 1,3 ($CH_2$), 1,6—2,5 (alpha- und beta-$CH_2$, gamma-$CH_3$), 3,16 (9H, s, N—$CH_3$), 3,1—4,5 (9H, $CH_2$, Glycerol, Cholin, CH—$CF_3$), 5,13 (1H, CH-Glycerol).

Elementaranalyse: $C_{29}H_{53}F_3NO_8P$ (MG = 631,717)

| | | | | | |
|---|---|---|---|---|---|
| ber.: | C 55,14 | H 8,46 | N 2,18 | P 4,90 | F 9,02 |
| gef.: | C 55,0 | H 8,7 | N 2,0 | P 4,8 | F 8,8 |

Beispiel 21

1-Palmitoyl-2-(2-butylhexanoyl)-*sn*-glycero-3-phosphocholin

durch Umsetzung von 1,31 g (mMol) 1-O-Trityl-2-(2-butylhexanoyl)-*sn*-glycero-3-phosphocholin mit

1,17 g (4 mMol) 1-Palmitoyl-1,2,4-triazol und 2,28 g (16 mMol) Bortrifluorid-etherat.

Ausbeute: 1,17 g (90,0% der Theorie) reines Produkt

$R_f$ = 0,36 (mobile Phase wie Beispiel 1)

NMR: 0,9 (9H, $CH_3$), 1,3 ($CH_2$), 1,6—2,3 (alpha- und beta-$CH_2$), 3,15 (9H, s, N—$CH_3$), 3,1—3,4 (9H, $CH_2$ Glycerol, Cholin, CH—CO), 5,1 (1H, CH-Glycerol).

Elementaranalyse: $C_{34}H_{68}NO_8P$ (MG = 649,89)

| | | | | |
|---|---|---|---|---|
| ber.: | C 62,84 | H 10,55 | N 2,16 | P 4,77 |
| gef.: | C 62,7 | H 10,7 | N 2,1 | P 4,5 |

Beispiel 22

1-Palmitoyl-2-oleoyl-*sn*-glycero-3-phosphocholin

durch Umsetzung von 1,53 g (2 mMol) 1-O-Trityl-2-oleoyl-*sn*-glycero-3-phosphocholin, gelöst in 20 ml wasserfreiem Methylenchlorid, mit 1,98 g (4 mMol) Palmitinsäureanhydrid und 1,09 g (8 mMol) Zinkchlorid während acht Stunden bei 20°C.

Ausbeute: 1,21 g (80% der Theorie) reines Produkt, ident mit dem Produkt aus Beispiel 1.

Beispiel 23

1-Palmitoyl-2-oleoyl-*sn*-glycero-3-phosphocholin

durch Umsetzung von 763 mg (1 mMol) 1-O-Trityl-2-oleoyl-*sn*-glycero-3-phosphocholin mit 990 mg (2 mMol) Palmitinsäureanhydrid in 50 ml wasserfreiem Methylenchlorid unter Einleitung von HCl-Gas unter Feuchtigkeitsausschluß bis zur Sättigung während einer Stunde bei Raumtemperatur.

Ausbeute: 379 mg (49,8% der Theorie) reines Produkt, ident mit dem Produkt aus Beispiel 1.

Beispiel 24

1-Palmitoyl-2-oleoyl-*sn*-glycero-3-phosphocholin

durch Umsetzung von 1,53 g (2 mMol) 1-O-Trityl-2-oleoyl-*sn*-glycero-3-phosphocholin, gelöst 20 ml wasserfreiem Methylenchlorid, mit 1,98 g (4 mMol) Palmitinsäureanhydrid und 1,82 g (16 mMol) Trifluoressigsäure während einer Stunde bei 20°C.

Ausbeute: 0,91 g (59,8% der Theorie) reines Produkt, ident mit dem Produkt aus Beispiel 1.

Beispiel 25

1-Palmitoyl-2-oleoyl-*sn*-glycero-3-phosphocholin

durch Umsetzung von 763 mg (1 mMol) 1-O-Trityl-2-oleoyl-*sn*-glycero-3-phosphocholin mit 990 mg (4 mMol) Palmitinsäureanhydrid und 532 mg (4 mMol) Aluminiumchlorid, gelöst in 1 ml Ether, während einer Stunde bei 20°C.

Ausbeute: 304 mg (40,0% der Theorie) reines Produkt, ident mit dem Produkt aus Beispiel 1.

Beispiel 26

1-Acetyl-2-palmitoyl-*sn*-glycero-3-phosphocholin

durch Umsetzung von 7,68 g (10 mMol) 1-O-(4-Methoxy-triphenyl)-2-palmitoyl-*sn*-glycero-3-phosphocholin mit 2.04 g (20 mMol) Acetanhydrid und 5,68 g (40 mMol) Bortrifluoridätherat.

Ausbeute: 4,87 (90,6% der Theorie) reines Produkt

$R_f$ = 0,28 (mobile Phase wie Beispiel 1)

NMR: 0,9 (3H, $CH_3$), 1,3 ($CH_2$), 1,6—2,3 (alpha- und beta-$CH_2$), 2,11 (3H, s, $CH_3CO$), 3,14 (9H, s, H—$CH_3$), 3,3—4,4 (8H, $CH_2$-Glycerol, Cholin), 5,11 (1H, CH-Glycerol).

Elementaranalyse: $C_{26}H_{52}NO_8P$ (MG = 537,67)

| | | | | |
|---|---|---|---|---|
| ber.: | C 58,08 | H 9,75 | N 2,60 | P 5,76 |
| gef.: | C 58,0 | H 9,9 | N 2,5 | P 5,6 |

Beispiel 27

1-(2-Ethylhexanoyl)-2-palmitoyl-*sn*-glycero-3-phosphocholin

durch Umsetzung von 1,60 g (2 mMol) (4,4'-Dimethoxy-triphenylmethyl)2-palmitoyl-*sn*-glycero-3-phosphocholin mit 1,04 g (4 mMol) 2-Ethylhexansäureanhydrid und 1,14 g (8 mMol) Bortrifluorid-etherat.

Ausbeute: 1,10 g (88,4% der Theorie) reines Produkt

$R_f$ = 0,38 (mobile Phase wie Beispiel 1)

NMR: 0,9 (9H, $CH_3$), 1,3 ($CH_2$), 1,6—2,5 (alpha- und beta-$Ch_2$), 3,15 (9H, s, N-$CH_3$), 3,3—4,4 (9H, $CH_2$, Glycerol, Cholin, CH—CO); 5,12 (1H, CH-Glycerol).

Elementaranalyse: $C_{32}H_{64}NO_8P$ (MG = 621,83)

| | | | | |
|---|---|---|---|---|
| ber.: | C 61,81 | H 10,37 | N 2,25 | P 4,98 |
| gef.: | C 61,7 | H 10,4 | N 2,1 | P 4,8 |

Beispiel 28

1-(9,10-Dibromstearoyl)-2-palmitoyl-*sn*-glycero-3-phosphocholin

durch Umsetzung von 409 mg (0,5 mMol) 1-O-(4,4',4''-Trimethoxy-triphenylmethyl)-2-palmitoyl-*sn*-

glycero-3-phosphocholin mit 867 mg (1 mMol) 9,10-Dobromstearinsäureanhydrid und 284 mg (2 mMol) Bortrifluorid-etherat.

Ausbeute: 411 mg (898,3% der Theorie) reines Produkt

$R_f$ = 0,40 (mobile Phase wie Beispiel 1)

NMR: 0,9 (6H, $CH_3$), 1,3 ($CH_2$), 1,6—2,5 (alpha- und beta-$CH_2$), 3,14 (9H, s, N—$CH_3$), 3,3—4,4 (8H, $CH_2$ Glycerol, Cholin) 5,15 (3H, m, CH-Glycerol, CH-Br)

Elementaranalyse: $C_{42}H_{82}Br_2NO_8P$ (MG = 919,915)

| | | | | |
|---|---|---|---|---|
| ber.: | C 54,84 | H 8,98 | N 1,52 | P 3,37 |
| gef.: | C 54,6 | H 10,1 | N 1,4 | P 3,4 |

Beispiel 29

1-Tetracosanoyl-2-palmitoyl-*sn*-glycero-3-phosphocholin

durch Umsetzung von 752 mg (1 mMol) 1-O-(4-Methyl-triphenylmethyl)-2-palmitoyl-*sn*-glycero-3-phosphocholin mit 1,44 g (2 mMol) Tetracosansäureanhydrid und 568 mg (4 mMol) Bortrifluorid-etherat bei 20°C.

Ausbeute: 758 mg (89,6% der Theorie) reines Produkt

$R_f$ = 0,42 (mobile Phase wie Beispiel 1)

NMR: 0,9 (6H, $CH_3$), 1,3 ($CH_2$), 1,6—2,3 (alpha- und beta-$CH_2$), 3,15 (9H, s, N—$CH_3$), 3,3—4,4 (8H, Glycerol, Cholin), 5,11 (1H, CH-Glycerol)

Elementaranalyse: $C_{48}H_{96}NO_8P$ (MG = 846,272)

| | | | | |
|---|---|---|---|---|
| ber.: | C 68,13 | H 11,43 | N 1,66 | P 3,66 |
| gef.: | C 68,3 | H 11,6 | N 1,6 | P 3,4 |

Beispiel 30

1-Linoleoyl-2-palmitoyl-*sn*-glycero-3-phosphocholin

durch Umsetzung von 1,64 g (2 mMol) 1-O-(4-n-Hexyl-triphenylmethyl)-2-palmitoyl-*sn*-glycero-3-phosphocholin mit 2,33 g (4 mMol) Linolsäureanhydrid und 1,14 g (8 mMol) Bortrifluorid-etherat bei 20°C unter Argon.

Ausbeute: 1,41 g (93,0% der Theorie) reines Produkt

$R_f$ = 0,40 (mobile Phase wie Beispiel 1)

NMR: 0,9 (6H, $CH_3$), 1,3 ($CH_2$), 1,5—2,3 (alpha- und beta-$CH_2$), 2,75 (2H, m, =C—$CH_2$—C=), 3,14 (9H, s, N—$CH_3$), 3,3—4,4 (8H, $CH_2$ Glycerol, Cholin), 5,11 (1H, CH-Glycerol), 5,35 (4H, m, Olefin).

Elementaranalyse: $C_{42}H_{80}NO_8P$ (MG = 758,082)

| | | | | |
|---|---|---|---|---|
| ber.: | C 66,55 | H 10,64 | N 1,85 | P 4,09 |
| gef.: | C 66,2 | H 10,9 | N 1,7 | P 3,8 |

Beispiel 31

1-(3-Trifluormethylbutyryl)-2-palmitoyl-*sn*-glycero-3-phosphocholin

durch Umsetzung von 780 mg (1 mMol) 1-O-(4-Isopropyl-triphenylmethyl)-2-palmitoyl-*sn*-glycero-3-phosphocholin mit 588 mg (2 mMol) 3-Trifluormethylbuttersäureanhydrid und 568 mg (4 mMol) Bortrifluorid-etherat bei 20°C.

Ausbeute: 567 mg (89,8% die Theorie) reines Produkt

$R_f$ = 0,31 (mobile Phase wie Beispiel 1)

NMR: 0,9 (3H, $CH_3$), 1,3 ($CH_2$), 1,5—2,5 (alpha- und beta-$CH_2$, gamma-$CH_3$), 3,15 (9H, s, N—$CH_3$), 3,1—4,5 (9H, $CH_2$, Glycerol, Cholin, CH—$CF_3$), 5,1 (1H, CH-Glycerol)

Elementaranalyse: $C_{29}H_{53}F_3NO_8P$ (MG = 631,717)

| | | | | | |
|---|---|---|---|---|---|
| ber.: | C 55,14 | H 8,46 | N 2,18 | P 4,90 | F 9,02 |
| gef.: | C 54,9 | H 8,7 | N 2,0 | P 4.7 | F 8,9 |

Beispiel 32

1-Butyryl-2-palmitoyl-*sn*-glycero-3-phosphocholin

durch Umsetzung von 2,51 g (3 mMol) 1-O-(4-n-Hexyloxy-triphenylmethyl)-2-palmitoyl-*sn*-glycero-3-phosphocholin mit 0,95 g (6 mMol) Buttersäureanhydrid und 1,70 g (12 mMol) Bortrifluorid-etherat.

Ausbeute: 1,52 g (89,6% der Theorie) reines Produkt

$R_f$ = 0,30 (mobile Phase wie Beispiel 1)

NMR: 0,9 (6H, $CH_3$), 1,3 ($CH_2$), 1,6—2,3 (alpha- und beta-$CH_2$), 3,16 (9H, s, N—$CH_3$); 3,1—4,3 (8H, m, $CH_2$ Glycerol, Cholin), 5,11 (1H, CH-Glycerol)

Elementaranalyse: $C_{28}H_{56}O_8P$ (MG = 565,73)

| | | | | |
|---|---|---|---|---|
| ber.: | C 59,45 | H 9,98 | N 2,48 | P 5,47 |
| gef.: | C 59,2 | H 10,2 | N 2,2 | P 5,3 |

Beispiel 33

1-Palmitoyl-2-oleoyl-*sn*-glycero-3-phosphocholin

durch Umsetzung von 1,68 g (2 mMol) 1-O-(4-Bromtriphenylmethyl)-2-oleoyl-*sn*-glycero-3-phosphocholin mit 1.98 g (4 mMol) Palmitinsäureanhydrid und 1,14 g (8 mMol) Bortrifluorid-etherat bei 20°C.

Ausbeute: 940 mg (61,8% der Theorie) reines Produkt, ident mit dem Produkt aus Beispiel 1.

Beispiel 34

1-Palmitoyl-2-oleoyl-*sn*-glycero-3-phosphocholin

durch Umsetzung von 41,4 mg (0,5 mMol) 1-O-(5-Chloro-2-Methoxy-triphenylmethyl)-2-oleoyl-*sn*-glycero-3-phosphocholin mit 495 mg (1.0 mMol) Palmitinsäureanhydrid und 284 mg (2.0 mMol) Bortrifluorid-etherat bei 20°C.

Ausbeute: 283 mg (74,5% der Theorie) reines Produkt, ident mit dem Produkt aus Beispiel 1.

Beispiel 35

1-Palmitoyl-2-oleoyl-*sn*-glycero-3-phosphocholin

durch Umsetzung von 436 mg (0,5 mMol) 1-O-(3-Brom-4-methoxy-triphenylmethyl)-2-oleoyl-*sn*-glycero-3-phosphocholin mit 495 mg (1 mMol) Palmitinsäureanhydrid und 284 mg (2 mMol) Bortrifluorid-etherat bei 20°C.

Ausbeute: 300 mg (78,9% der Theorie) reines Produkt, ident mit dem Produkt aus Beispiel 1.

Beispiel 36

1-Palmitoyl-2-oleoyl-*sn*-glycero-3-phosphocholin

durch Umsetzung von 798 mg (1 mMol) 1-O-(2-Chlortriphenylmethyl)-2-oleoyl-*sn*-glycero-3-phosphocholin mit 990 mg (2 mMol) Palmitinsäureanhydrid und 568 mg (4 mMol) Bortrifluorid-etherat bei 20°C.

Ausbeute: 453 mg (59,6% der Theorie) reines Produkt, ident mit dem Produkt aus Beispiel 1.

Beispiel 37

1-Palmitoyl-2-oleoyl-*sn*-glycero-3-phosphocholin

durch Umsetzung von 411 mg (0,5 mMol) 1-O-(4-Isopropoxy-triphenylmethyl)-2-oleoyl-*sn*-glycero-3-phosphocholin mit 495 mg (1 mMol) Palmitinsäureanhydrid und 284 mg (2 mMol) Bortrifluorid-etherat bei 20°C.

Ausbeute: 338 mg (88,9% der Theorie) reines Produkt, ident mit dem Produkt aus Beispiel 1.

**Patentansprüche**

1. Einstufiges Verfahren zur Herstellung von gemischt substituierten, enantiomerenreinen 1,2-Diacyl-*sn*-glycero-3-phosphocholinen der allgemeinen Formel

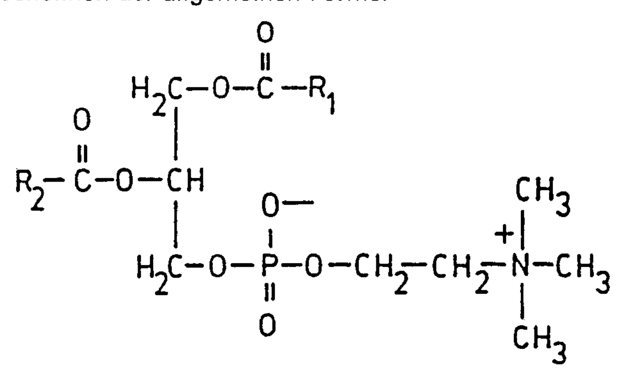

I

in der

$R_1$ und $R_2$ verschieden sind und unabhängig voneinander einen unsubstituierten oder ein- oder mehrfach durch Halogenatome oder Alkoxyreste substituierten $C_1$ bis $C_{24}$-Alkyl- oder $C_3$ bis $C_{24}$-Alkenylrest bedeuten; das erfindungsgemäße Verfahren besteht darin, daß man ein 1-O-Triphenylmethyl-2-acyl-*sn*-glycero-3-phosphocholin der allgemeinen Formel

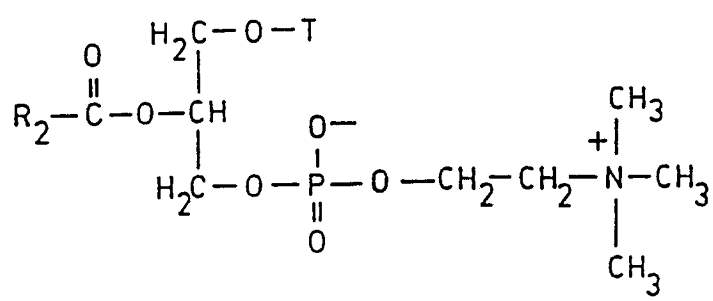

II

in der

$R_2$ wie in Formel I definiert ist und

T eine unsubstituierte oder ein- oder mehrfach durch $C_1$ bis $C_6$-Alkyl-, $C_1$ bis $C_6$-Alkoxyrest oder Halogenatome substituierte Triphenylmethylgruppe bedeutet, mit einem reaktiven Carbonsäurederivat der allgemeinen Formel

$$R_1—CO—X \qquad III$$

in der

$R_1$ wie in Formel I definiert ist und

X a) einen Carbonsäurerest der Formel $R_1—CO—O—$ (IV) oder $CF_3—CO—O—$ (V), wobei $R_1$ in Formel (IV) die gleiche Bedeutung wie in Formel (I) hat,

b) einen Kohlensäurerest der Formel $R_3—O—CO—O—$ (VI), wobei $R_3$ für niederes Alkyl, Aralkyl oder einen unsubstituierten oder ein- oder mehrfach durch niederes Alkyl, niederes Alkoxy, Trifluormethyl oder Halogen substituierten Phenyl-, 1- oder 2-Naphthylrest steht,

c) einen Sulfonsäurerest der Formel $R_4—SO_2—O—$ (VI), wobei $R_4$ für niederes Alkyl, perfluoriertes niederes Alkyl oder einen unsubstituierten oder ein- oder mehrfach durch niederes Alkyl, niederes Alkoxy, Trifluormethyl oder Halogen substituierten Phenyl, 1- oder 2-Naphthylrest steht, oder

d) einen Imidazolyl-, Triazolyl-, Tetrazolyl-, Benzimidazolyl- oder Benztriazolylrest bedeutet,

in Gegenwart einer anorganischen oder organischen Protonen-Säure, einer Lewis-Säure oder deren Addukte mit Elektronendonatoren in einem gegenüber den Reaktionspartnern inerten Lösungsmittel oder Lösungsmittelgemisch bei Temperaturen von −10°C bis zum Siedepunkt des Lösungsmittels oder der niedrigst siedenden Lösungsmittelkomponente umsetzt und die dabei enthaltenen Verbindungen der allgemeinen Formel I aus dem Reaktionsgemisch isoliert.

2. Verfahren nach Anspruch 1, dadurch gekennzeichnet, daß man die Umsetzung in Methylenchlorid, Chloroform, Diethylether, Acetonitril oder Ethylacetat durchführt.

3. Verfahren nach einem der Ansprüche 1 oder 2, dadurch gekennzeichnet, daß man eine Verbindung der Formel II mit einem Anhydrid der Formel III, worin X einen Carbonsäurerest der Formel IV, oder mit einem gemischten Anhydrid der Formel III, worin X den Trifluoracetatrest der Formel V bedeutet, umsetzt.

4. Verfahren nach einem der Ansprüche 1 oder 2, dadurch gekennzeichnet, daß man eine Verbindung der Formel II mit einem 1-Acyl-1,2,4-triazol oder N-Acyl-tetrazol der Formel III umsetzt, wobei Acyl einen Rest $R_1—CO—$ mit der für $R_1$ in Anspruch 1 angegebenen Definition bedeutet.

5. Verfahren nach Anspruch 1 oder 2, dadurch gekennzeichnet, daß man eine Verbindung der Formel II mit einem aktiven Ester der Formel III umsetzt, worin X einen Kohlensäurerest der Formel VI oder einen Sulfonsäurerest der Formel VII darstellt und in diesen Resten $R_3$ Methyl, Ethyl, Benzyl oder Phenyl und $R_4$ Methyl, Ethyl oder Trifluormethyl bedeuten.

6. Verfahren nach einem der Ansprüche 1 bis 5, dadurch gekennzeichnet, daß man die Umsetzung in Gegenwart von trockener, gasförmiger HCl, von Trifluoressigsäure oder von Methansulfonsäure durchführt.

7. Verfahren nach einem der Ansprüche 1 bis 5, dadurch gekennzeichnet, daß man die Umsetzung in Gegenwart einer Lewis-Säure, bevorzugt Bortrifluorid, Bortrichlorid, Aluminiumtrichlorid oder Zinkchlorid, durchführt.

8. Verfahren nach Anspruch 7, dadurch gekennzeichnet, daß man die Umsetzung in Gegenwart von Bortrifluorid-etherat durchführt.

9. Verfahren nach einem der Ansprüche 1 bis 8, dadurch gekennzeichnet, daß man einen 1,2- bis 2-fachen molaren Überschuß des Acylierungsmittels der Formel III und einen 2- bis 8-fachen Überschuß der Katalysatorsäure, bezogen auf die Ausgangsverbindung der Formel II, einsetzt.

10. Verfahren nach einem der Ansprüche 1 bis 9, dadurch gekennzeichnet, daß man die Umsetzung im Temperaturbereich von 0 bis 25°C durchführt.

## Revendications

1. Procédé en une étape pour préparer des énantiomères pures de 1,2-diacyl-sn-glycéro-3-phosphocholines à substituants mixtes de formule générale I:

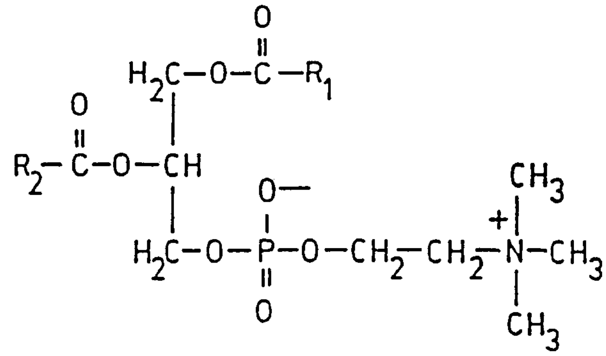

I

dans laquelle

$R_1$ et $R_2$ sont différents, indépendants l'un de l'autre, représentent des groupes alkyles de 1 à 24 atomes de carbone ou des groupes alcényles de 3 à 24 atomes de carbone, substitués une ou plusieurs fois par des atomes d'halogène ou des restes alcoxy, procédé caractérisé en ce qu'on fair réagir une 1-O-triphénylméthyl-2-acyl-sn-glycéro-3-phosphocholine de formule générale II:

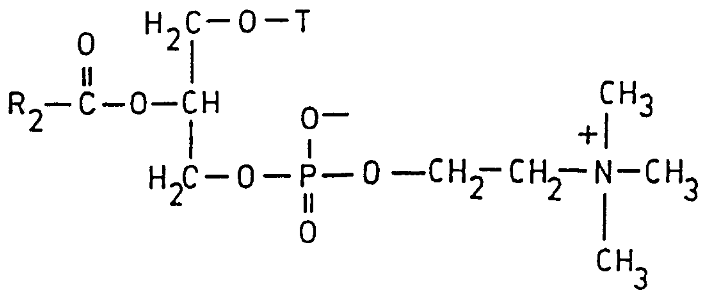

II

dans laquelle $R_2$ est défini comme dans la formule I, T est un groupe triphénylméthyle non substitué ou une ou plusieurs fois substitué par un groupe alkyle de 1 à 6 atomes de carbone, par un groupe alcoxy de 1 à 6 atomes de carbone ou par des atomes d'halogène,
avec un dérivé d'acide carbonique réactif de formule générale III:

$$R_1—CO—X \qquad III$$

dans laquelle

$R_1$ est défini comme dans la formule I, et

X représente

(a) un groupe acide carbonique de formule $R_1—CO—O—$ (IV) ou $CF_3—CO—O—$ (V), où $R_1$ a la même signification dans la formule IV que dans la formule I,

(b) un groupe acide carbonique de formule $R_3—O—CO—O—$ (VI), où $R_3$ représente un groupe alkyle ou aralkyle inférieur, ou un groupe phényle ou le 1- ou 2-naphtyle non substitué ou substitué une ou plusieurs fois par des groupes alkyle ou alcoxy inférieurs, un groupe trifluorométhyle ou des halogènes,

(c) un groupe acide sulfonique de formule $R_4—SO_2—O—$ (VII), dans lequel $R_4$ représente un groupe alkyle inférieur, un groupe alkyle perfluoré inférieur ou un groupe phényle ou 1- ou 2-naphtyle non substitué ou substitué une ou plusieurs fois par un groupe alkyle ou alcoxy inférieur, un groupe trifluorométhyle ou des atomes d'halogène,

(d) un groupe imidazole-yle, triazole-yle, tétrazole-yle, benzimidazole-yle ou benztriazole-yle,

en présence d'un acide protonique organique ou non, d'un acide de Lewis, ou leurs composés d'addition avec un donneur d'électrons dans un solvant ou un mélange de solvants inerte vis-à-vis des composants de la réaction, à une température comprise entre −10°C et la température d'ébullition du solvant ou bien la température d'ébullition la plus basse d'un des solvants, et en ce qu'on isole du mélange réactionnel les composés de formule générale I obtenus.

2. Procédé selon la revendication 1, caractérisé en ce que la réaction est conduite en présence de chlorure de méthylène, de chloroforme, de diéthyléther, d'acétonitrile ou d'acétate d'éthyle.

3. Procédé selon l'une des revendications 1 ou 2, caractérisé en ce qu'on fait réagir un composé de formule II avec un anhydride de formule III, où X est un groupe acide carboxylique de formule IV, ou bien avec un anhydride mélangé de formule III où X représente un groupe trifluoroacétate.

4. Procédé selon l'une des revendications 1 ou 2, caractérisé en ce qu'on fait réagir un composé de formule II avec un 1-acyl-1,2,4-triazole ou un N-acyl-tetrazole de formule III, où acyle désigne le groupe $R_1—CO—$ dans lequel $R_1$ a la signification indiquée dans la revendication 1.

5. Procédé selon la revendication 1 ou 2, caractérisé en ce qu'on fait réagir un composé de formule II avec un ester actif de formule III, où X désigne un groupe acide carbonique de formule VI ou bien un groupe acide sulfonique de formule VII et dans ces groupes $R_3$ signifie un groupe méthyle, éthyle, benzyle ou phényle et $R_4$ un groupe méthyle, éthyle ou trifluorométhyle.

6. Procédé selon l'une des revendications 1 à 5, caractérisé en ce que la réaction est conduite en présence d'HCl gazeux sec, d'acide trifluoroacétique ou d'acide méthanesulfonique.

7. Procédé selon l'une des revendications 1 à 5, caractérisé en ce que la réaction est conduite en présence d'un acide de Lewis, avantageusement le trifluorure de bore, le trichlorure d'aluminium ou le chlorure de zinc.

8. Procédé selon la revendication 7, caractérisé en ce que la réaction est conduite en présence d'éthérat-trifluorure de bore.

9. Procédé selon l'une des revendications 1 à 8, caractérisé en ce qu'on utilise un excès molaire de 1,2 à 2 fois du moyen d'acylation de formule III et un excès de 2 à 8 fois d'acide catalyseur calculé par rapport au produit de départ de formule II.

10. Procédé selon l'une des revendications 1 à 9, caractérisé en ce que la réaction est conduite à une température comprise entre 0 et 25°C.

**Claims**

1. A single-stage process for preparing mixed-substituted enantiomerically pure 1,2-diacyl-*sn*-glycero-3-phosphocholines of the general formula

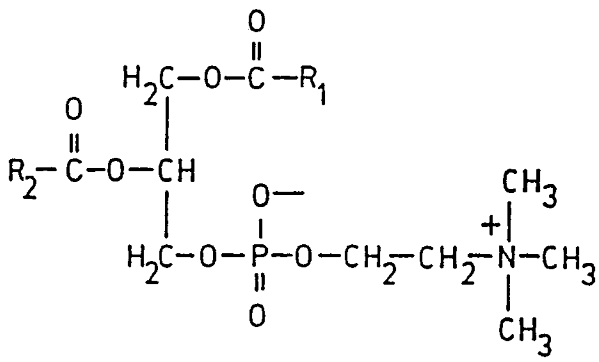

I

in which

$R_1$ and $R_2$ are different and independently of each other denote an unsubstituted or halogen- or alkoxy-monosubstituted or -polysubstituted $C_1$ to $C_{24}$-alkyl or $C_3$ to $C_{24}$-alkenyl radical; the process according to the invention comprises reacting a 1-O-triphenylmethyl-2-acyl-*sn*-glycero-3-phosphocholine of the general formula

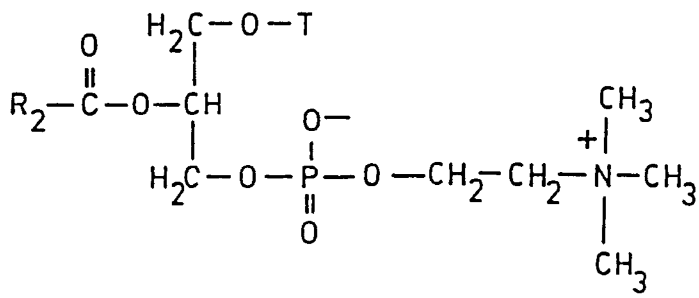

II

in which

$R_2$ is as defined in the formula I and

T denotes an unsubstituted or $C_1$ to $C_6$-alkyl-, $C_1$ to $C_6$-alkoxy- or halogen-monosubstituted or -polysubstituted triphenylmethyl group with a reactive carboxylic acid derivative of the general formula

$$R_1—CO—X \qquad III$$

in which

$R_1$ is as defined in the formula I and

X denotes

a) a carboxylic acid radical of the formula $R_1—CO—O$ (IV) or $CF_3—CO—O$ (V), where $R_1$ in the formula (IV) has the same meaning as in the formula (I),

b) a carbonic acid radical of the formula $R_3—O—CO—O—$ (VI), where $R_3$ stands for lower alkyl, aralkyl or an unsubstituted or lower alkyl-, lower alkoxy-, trifluoromethyl- or halogen-monosubstituted or -polysubstituted phenyl, 1- or 2-naphthyl radical,

c) a sulphonic acid radical of the formula $R_4—SO_2—O—$ (VII), where $R_4$ stands for lower alkyl, perfluorinated lower alkyl or an unsubstituted or lower alkyl-, lower alkoxy-, trifluoromethyl- or halogen-monosubstituted or -polysubstituted phenyl, 1- or 2-naphthyl radical, or

d) an imidazolyl, triazolyl, tetrazolyl, benzimidazolyl or benzotriazolyl radical,

in the presence of an inorganic or organic protonic acid, of a Lewis acid or of adducts thereof with electron donors in a solvent or solvent mixture inert towards the reactants, at temperatures of −10°C to the boiling point of the solvent or of the lowest-boiling solvent component, and isolating the resulting compounds of the general formula I from the reaction mixture.

2. Process according to Claim 1, characterized in that the reaction is carried out in methylene chloride, chloroform, diethyl ether, acetonitrile or ethyl acetate.

3. Process according to either of Claims 1 or 2, characterized in that a compound of the formula II is reacted with an anhydride of the formula III in which X denotes a carboxylic acid radical of the formula IV or with a mixed anhydride of the formula III in which X denotes the trifluoroacetate radical of the formula V.

4. Process according to either of Claims 1 or 2, characterized in that a compound of the formula II is reacted with a 1-acyl-1,2,4-triazole or N-acyltetrazole of the formula III, acyl denoting a radical $R_1—CO—$ where $R_1$ is as defined in Claim 1.

5. Process according to Claim 1 or 2, characterized in that a compound of the formula II is reacted with an active ester of the formula III in which X represents a carbonic acid radical of the formula VI or a

sulphonic acid radical of the formula VII and in these radicals $R_3$ denotes methyl, ethyl, benzyl or phenyl and $R_4$ denotes methyl, ethyl or trifluoromethyl.

6. Process according to any one of Claims 1 to 5, characterized in that the reaction is carried out in the presence of dry, gaseous HCl, or of trifluoroacetic acid or of methanesulphonic acid.

7. Process according to any one of Claims 1 to 5, characterized in that the reaction is carried out in the presence of a Lewis acid, preferably boron trifluoride, boron trichloride, aluminium trichloride or zinc chloride.

8. Process according to Claim 7, characterized in that the reaction is carried out in the presence of boron trifluoride etherate.

9. Process according to any one of Claims 1 to 8, characterized in that a 1.2 to 2 times molar excess of acylating agent of the formula III and a 2 to 8 times excess of catalytic acid, based on the starting compound of the formula II, is used.

10. Process according to any one of Claims 1 to 9, characterized in that the reaction is carried out within the temperature range from 0 to 25°C.